# EUROPEAN PATENT APPLICATION

(11) **EP 4 835 987 A1**
(43) Date of publication of application: **04.11.2026**
(21) Application number: 25221520.7
(22) Date of filing: 08.12.2025
(51) Int. Cl.: H01M 4/139, H01M 4/36, H01M 4/38, H01M 4/485, H01M 4/62, H01M 4/134, H01M 4/1395

(54) **COMPOSITE LITHIUM METAL MATERIAL, PREPARATION METHOD AND USE THEREOF, AND COMPOSITE LITHIUM METAL NEGATIVE ELECTRODE**

(30) Priority: 29.04.2025 CN 202510558892
(71) Applicant: Yibin Dongchi New Energy Technology Co., Ltd, Yibin City, Sichuan Province 644600 (CN)
(72) Inventor: XIE, Haiming, Yibin City, 644600 (CN); JIANG, Ying, Yibin City, 644600 (CN); ZHANG, Xie, Yibin City, 644600 (CN); CONG, Lina, Yibin City, 644600 (CN)
(74) Representative: Gleiss Große Schrell und Partner mbB

(57) **Abstract**

Provided are a composite lithium metal material, a preparation method and use thereof, and a composite lithium metal negative electrode. The composite lithium metal material includes: lithium metal; and LiTiO₂ and a carbon material, all dispersed in the lithium metal. LiTiO₂ and the carbon material as lithiophilic support structures can synergistically improve the interfacial stability and structural stability of the composite lithium metal negative electrode during cycling, both to maintain the high-capacity advantages of lithium metal, and to mitigate volume fluctuations and suppress uncontrollable lithium dendrite growth of the lithium metal negative electrode, thus enabling the composite lithium metal negative electrode to have excellent cycle stability. The preparation method for the composite lithium metal negative electrode shows the advantage of easy operation and good repeatability.

## Description

### TECHNICAL FIELD

The present disclosure belongs to the technical field of lithium batteries, and in particular relates to a composite lithium metal material, a preparation method and use thereof, and a composite lithium metal negative electrode.

### BACKGROUND

Lithium-ion batteries have a high specific energy and a high voltage platform, along with advantages such as environmental friendliness and long cycle life, and therefore have been widely used in numerous fields, including portable medical devices and electric vehicles. Currently, the most common lithium-ion batteries typically use graphite and composites thereof as the negative electrode, which offer excellent electrochemical and cycling performance. However, the commercial graphite negative electrode has a low specific capacity of only 372 mAh/g.

In recent years, with the rapid development of electronic devices and electric vehicles, higher demands have been placed on the endurance and high energy density of lithium-ion batteries. With a very high theoretical specific capacity of 3860 mAh/g and a very low redox potential (-3.04 V versus standard hydrogen electrode), the lithium metal negative electrode is considered the ideal negative electrode material for next-generation lithium-ion batteries with a high energy density. However, the "hostless" nature and high reactivity of lithium metal lead to infinite volume changes and uncontrollable lithium dendrite growth during the charge/discharge process, resulting in rapid capacity decay and poor cycle stability in lithium-ion batteries.

### SUMMARY

In view of this, the present disclosure is to provide a composite lithium metal material, a preparation method and use thereof, and a composite lithium metal negative electrode. The composite lithium metal negative electrode is prepared by using the composite lithium metal material, and a resulting assembled full-cell has excellent cycle stability.

The present disclosure provides a composite lithium metal material, including:
lithium metal; and
LiTiO₂ (lithium titanium oxide) and a carbon material, all dispersed in the lithium metal.

In some embodiments, a mass ratio of the lithium metal to the LiTiO₂ is in a range of 1 : 0.1-10.

In some embodiments, the carbon material includes at least one selected from the group consisting of graphene, carbon fiber, carbon microspheres, a graphite, a soft carbon, a hard carbon, and carbon nanotubes.

In some embodiments, a mass ratio of the lithium metal to the carbon material is in a range of 1 : 0.1-10.

The present disclosure further provides a method for preparing the composite lithium metal material as described in the aforementioned technical solutions, including the following steps:
mixing the carbon material, titanium dioxide, and the lithium metal, and melting a resulting mixture and conducting an in-situ lithiation reaction to obtain the composite lithium metal material.

In some embodiments, a mass ratio of the titanium dioxide, the carbon material, and the lithium metal is in a range of 0.1-10 : 0.1-10 : 1.

In some embodiments, mixing the carbon material, the titanium dioxide, and the lithium metal is conducted by pressing the carbon material and the titanium dioxide into the lithium metal through roll milling.

In some embodiments, the in-situ lithiation reaction is conducted at a temperature of 350°C to 370°C for 10 min to 20 min.

The present disclosure further provides use of the composite lithium metal material as described in the aforementioned technical solutions, or the composite lithium metal material prepared by the method as described in the aforementioned technical solutions, in a negative electrode of a lithium battery.

The present disclosure further provides a composite lithium metal negative electrode, where the composite lithium metal negative electrode is made of the composite lithium metal material as described in the aforementioned technical solutions, or the composite lithium metal material prepared by the method as described in the aforementioned technical solutions; and
the composite lithium metal negative electrode is sheet-like and has a thickness of 30 µm to 600 µm.

Compared with conventional technology, some embodiments of the present disclosure have the following beneficial effects:
The present disclosure provides a composite lithium metal material, including: lithium metal; and LiTiO₂ and a carbon material, all dispersed in the lithium metal.

In the present disclosure, LiTiO₂ and a carbon material are used as lithiophilic support structures. The in-situ generated LiTiO₂ serves as a dual electron/ion-conducting scaffold for the hostless lithium anode. The uniformly distributed LiTiO₂ can effectively adjust and control lithium ions so that lithium ions can be uniformly distributed on the electrode, thereby achieving uniform lithium deposition and inhibiting the formation of lithium dendrite. The addition of the carbon material can further improve the conductivity and structural stability, thus enabling the composite lithium metal negative electrode to have cycle stability under a high current. LiTiO₂ and the carbon material can synergistically improve the interfacial stability and structural stability of the composite lithium metal negative electrode during cycling, both to maintain the advantages of high capacity of lithium metal, and to inhibit volume changes and uncontrollable growth of lithium dendrites, thus enabling a resulting assembled full-cell to have excellent cycle stability.

The present disclosure further provides a composite lithium metal negative electrode, and a preparation process thereof is easy to operate, with good repeatability.

### BRIEF DESCRIPTION OF THE DRAWINGS

In order to illustrate the technical solutions in the embodiments of the present disclosure and prior art more clearly, a brief introduction to the drawings required for the embodiments will be provided below. Obviously, the drawings in the following description are merely some of the embodiments of the present disclosure, and those of ordinary skill in the art can also obtain other drawings according to these drawings without involving any inventive effort.

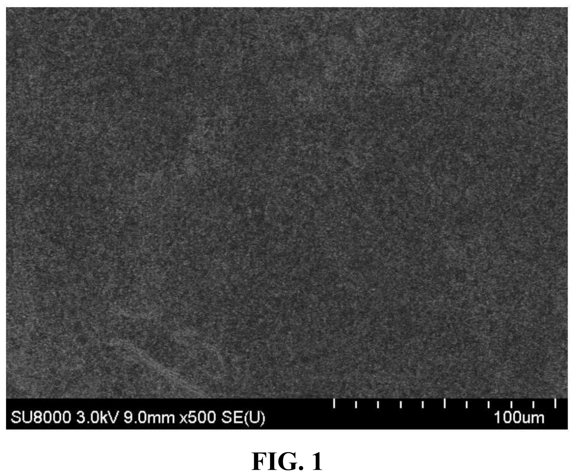

FIG. 1 shows an SEM (scanning electron microscope) image of the composite lithium metal negative electrode prepared in Example 1 (with a mass ratio of titanium dioxide, carbon fiber, and lithium metal being 0.5 : 0.3 : 1);

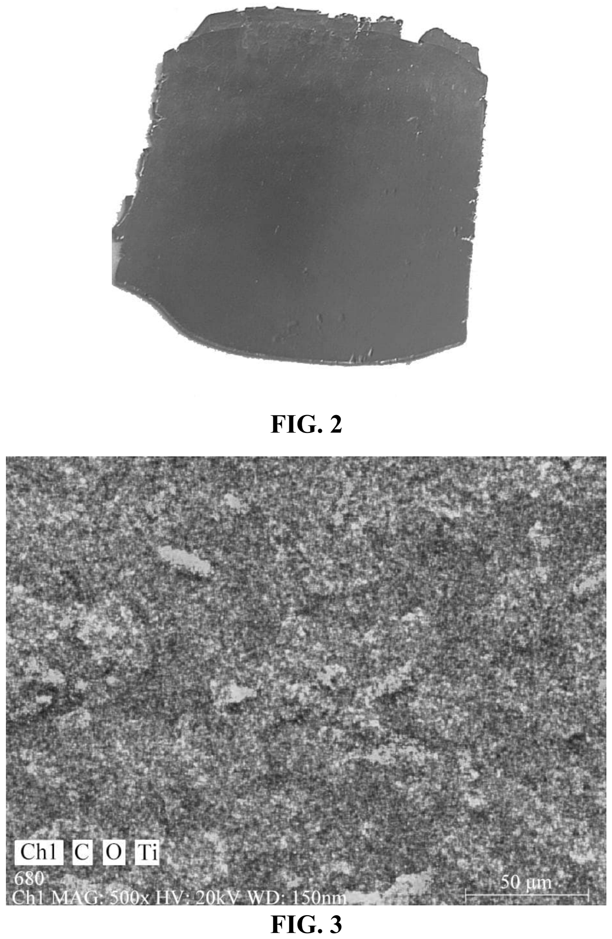

FIG. 2 shows a picture of the composite lithium metal negative electrode prepared in Example 1 (with a mass ratio of titanium dioxide, carbon fiber, and lithium metal being 0.5 : 0.3 : 1);
FIG. 3 shows an image showing the composition and distribution thereof of the composite lithium metal negative electrode prepared in Example 1 (with a mass ratio of titanium dioxide, carbon fiber, and lithium metal being 0.5 : 0.3 : 1);

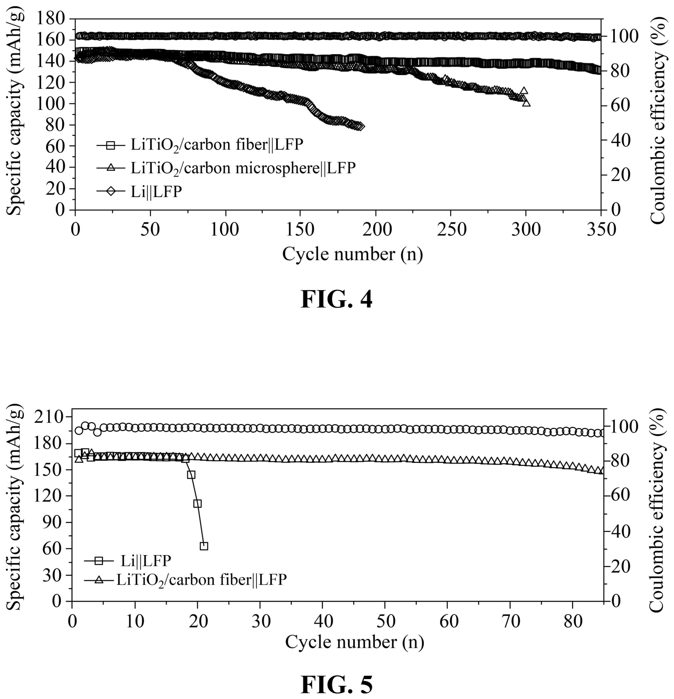

FIG. 4 shows a graph showing the comparison of charge/discharge cycles at 1 C of full-cells assembled respectively by a composite lithium metal negative electrode prepared in Example 1 (with a mass ratio of titanium dioxide, carbon fiber or carbon microspheres, and lithium metal being 0.5 : 0.3 : 1, and a thickness of 200 µm) and an unmodified lithium metal negative electrode with lithium iron phosphate;
FIG. 5 shows a graph showing the comparison of charge/discharge cycles at 0.5 C of full-cells assembled respectively by a composite lithium metal negative electrode prepared in Example 2 (with a mass ratio of titanium dioxide, carbon fiber, and lithium metal being 0.5 : 0.3 : 1, and a thickness of 50 µm) and an unmodified lithium metal negative electrode with lithium iron phosphate;

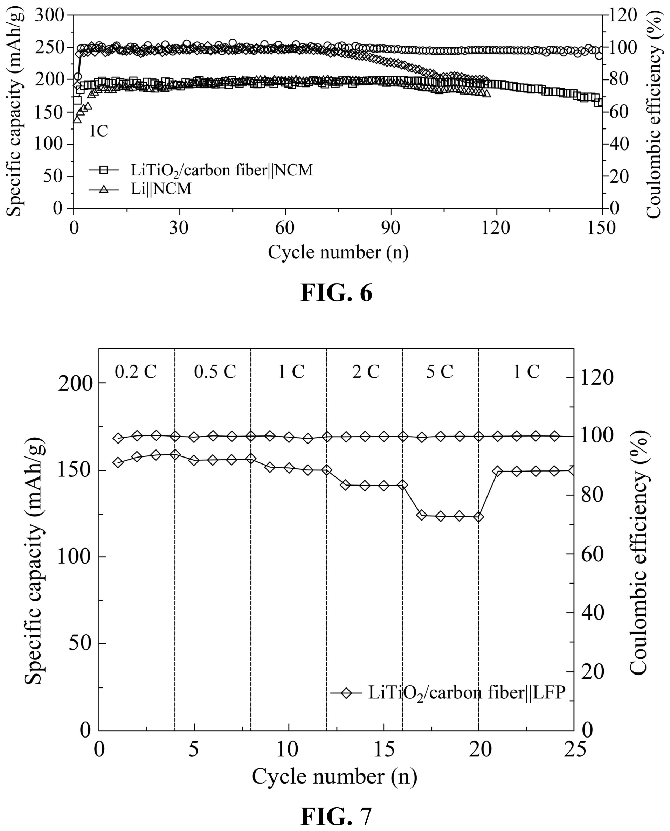

FIG. 6 shows a graph showing the comparison of charge/discharge cycles at 1 C of full-cells assembled respectively by a composite lithium metal negative electrode prepared in Example 3 (with a mass ratio of titanium dioxide, carbon fiber, and lithium metal being 0.4 : 1 : 1, and a thickness of 200 µm) and an unmodified lithium metal negative electrode with a ternary NCM811;
FIG. 7 shows a graph showing the comparison of charge/discharge cycles of a full-cell assembled by the composite lithium metal negative electrode prepared in Example 1 with lithium iron phosphate at different rates; and

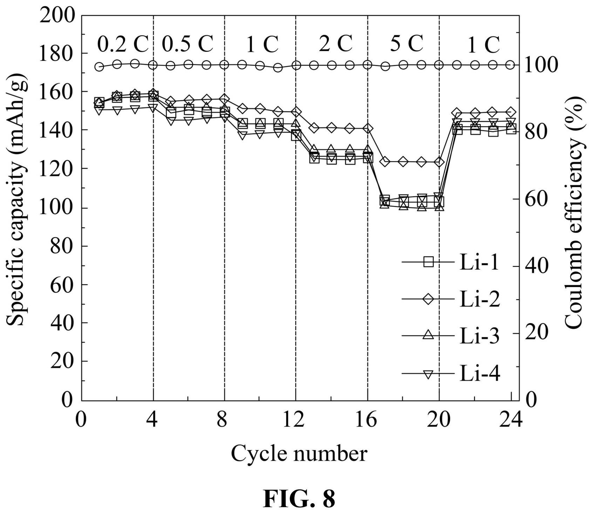

FIG. 8 shows a graph showing the comparison of charge/discharge cycles of full-cells assembled by composite lithium metal negative electrodes with different mass ratios with lithium iron phosphate at different rates, where Li-1 indicates a mass ratio of titanium dioxide, carbon fiber, and lithium metal being 1 : 1 : 1, Li-2 indicates a mass ratio of titanium dioxide, carbon fiber, and lithium metal being 0.5 : 0.3 : 1, Li-3 indicates a mass ratio of titanium dioxide, carbon fiber, and lithium metal being 0.4 : 1 : 1, and Li-4 indicates a mass ratio of titanium dioxide, carbon fiber, and lithium metal being 0.1 : 0.1 : 1.

### DETAILED DESCRIPTION OF THE EMBODIMENTS

The present disclosure provides a composite lithium metal material, including: lithium metal; and LiTiO₂ and a carbon material, all dispersed in the lithium metal.

In the present disclosure, unless otherwise specified, the materials and equipment used are commercially available in the art.

In some embodiments of the present disclosure, the carbon material includes at least one selected from the group consisting of graphene, carbon fiber, carbon microspheres, a graphite, a soft carbon, a hard carbon, and carbon nanotubes; and the graphite includes natural graphite and artificial graphite.

In some embodiments of the present disclosure, a mass ratio of the lithium metal to the LiTiO₂ is in a range of 1 : (0.1-10).

In some embodiments of the present disclosure, a mass ratio of the lithium metal to the carbon material is in a range of 1 : (0.1-10).

In the present disclosure, the composite lithium metal material is used to prepare a composite lithium metal negative electrode. The in-situ generated LiTiO₂ serves as a dual electron/ion-conducting scaffold for the hostless lithium anode, benefiting uniform lithium deposition. LiTiO₂ and the carbon material as lithiophilic support structures can synergistically improve the interfacial stability and structural stability of the composite lithium metal negative electrode during cycling, both to maintain the high-capacity advantage of lithium metal, and to mitigate volume fluctuations and suppress uncontrollable lithium dendrite growth of the lithium metal negative electrode, thus enabling a resulting assembled full-cell to have excellent cycle stability.

The present disclosure further provides a method for preparing the composite lithium metal material as described in the aforementioned technical solutions, including the following steps:
mixing the carbon material, titanium dioxide, and the lithium metal, and melting a resulting mixture and conducting an in-situ lithiation reaction to obtain the composite lithium metal material.

In some embodiments of the present disclosure, the carbon material is a thermally treated carbon material, and the thermal treatment is conducted by soaking the carbon material in a strong oxidizing solvent, and then washing and drying a resulting soaked product. In some embodiments, the strong oxidizing solvent is a mixture of concentrated nitric acid and concentrated hydrochloric acid, with a volume ratio of the concentrated nitric acid to the concentrated hydrochloric acid being (1-10) : (1-10), more preferably 1 : 1. In some embodiments, the strong oxidizing solvent is a mixture of concentrated nitric acid and concentrated sulfuric acid, with a volume ratio of the concentrated nitric acid to the concentrated sulfuric acid being (1-10) : (1-10), more preferably 1 : 1. In some embodiments, the soaking is conducted at a temperature of 100°C to 120°C for 1 h. In some embodiments, the washing is conducted by washing with water until neutral; and the drying is conducted at 120°C for 16 h. The effect of the thermal treatment is to remove impurities from the surface of the carbon material, while making the carbon material more easily adsorbed onto lithium metal.

In some embodiments of the present disclosure, the method further includes, before mixing the carbon material, the titanium dioxide, and lithium metal, subjecting the carbon material and the titanium dioxide to a water removal treatment, where the water removal treatment is conducted under a vacuum atmosphere at a temperature of 100°C to 120°C for 12 h to 24 h.

In some embodiments of the present disclosure, a mass ratio of the titanium dioxide, the carbon material, and the lithium metal is in a range of (0.1-10) : (0.1-10) : 1, more preferably (1-10) : (1-10) : 1, and specifically is 1 : 1 : 1, 0.5 : 0.3 : 1, 0.4 : 1 : 1, or 0.1 : 0.1 : 1. The mass ratios as described above do not cause excessive LiTiO₂ and the carbon material to lead to agglomeration of particles on the surface of the composite lithium metal negative electrode, which is detrimental to the deposition and stripping of lithium metal. The mass ratios also do not lead to too little LiTiO₂ and carbon material to form the skeletal structure.

In some embodiments of the present disclosure, mixing the carbon material, the titanium dioxide, and the lithium metal are conducted by pressing the carbon material and titanium dioxide into the lithium metal through roll milling. In some embodiments, the carbon material and the titanium dioxide each are in powder form and independently have a particle size of 5 nm to 15 nm; and the roll milling is conducted in a glove box fully filled with argon. During the pressing process, the lithiation reaction initiates when titanium dioxide comes into contact with lithium metal.

In some embodiments of the present disclosure, the in-situ lithiation reaction is conducted at a temperature of 350°C to 370°C, and the in-situ lithiation reaction is conducted with stirring for 10 min to 20 min, more preferably 15 min to 20 min; and the in-situ lithiation reaction is conducted by stirring the resulting mixture in a molten state, with no specific limitation on a stirring rate. In the stirring process, titanium dioxide and lithium fully react to generate LiTiO₂, and the components are mixed uniformly. In some embodiments, the in-situ lithiation reaction is conducted in a glove box fully filled with argon.

The present disclosure further provides use of the composite lithium metal material as described in the aforementioned technical solutions, or the composite lithium metal material prepared by the method as described in the aforementioned technical solutions, in a negative electrode of a lithium battery.

In the present disclosure, a composite lithium metal negative electrode having excellent lithiophilicity and conductivity is built, which effectively directs the deposition of lithium metal, improves the lithium metal negative electrode/electrolyte interface stability, and improves issues of lithium dendrite and infinite volume change of the lithium metal negative, thereby resulting in a composite lithium metal negative electrode with excellent cycle stability.

The present disclosure further provides a composite lithium metal negative electrode, where the composite lithium metal negative electrode is made of the composite lithium metal material as described in the aforementioned technical solutions, or the composite lithium metal material prepared by the method as described in the aforementioned technical solutions; and
the composite lithium metal negative electrode is sheet-like and has a thickness of 30 µm to 600 µm.

In some embodiments of the present disclosure, the composite lithium metal negative electrode has the thickness of 50 µm to 200 µm, and specifically is 50 µm, 100 µm or 200 µm.

In the present disclosure, the composite lithium metal negative electrode is prepared by hot pressing of the composite lithium metal material as described in the aforementioned technical solutions, or the composite lithium metal material prepared by the method as described in the aforementioned technical solutions.

In some embodiments of the present disclosure, the hot pressing is conducted at a temperature of 80°C to 100°C for 5 min. In the present disclosure, hot pressing is used to facilitate the extension of the composite lithium metal material into a composite lithium metal electrode sheet with a controllable thickness.

In the present disclosure, a composite lithium metal negative electrode is prepared using titanium dioxide, a carbon material, and lithium metal by melting and hot pressing, and a composite lithium metal negative electrode with a controllable thickness can be obtained by melting and mixing raw materials, followed by hot pressing. In the present disclosure, the lithiophilic LiTiO₂ and a carbon material with excellent conductivity cooperate to improve the lithium dendrite and volume change issues of the lithium metal negative electrode, so as to obtain a composite lithium metal negative electrode with excellent rate performance and cycle stability.

To further illustrate the present disclosure, the composite lithium metal material, the preparation method and the use thereof, and the composite lithium metal negative electrode provided by the present disclosure are described in detail below in conjunction with the accompanying drawings and examples, which cannot be construed as limiting the scope of the present disclosure, however.

### Example 1

(1) Pre-treatment of carbon fiber (or carbon microspheres): carbon fibers (or carbon microspheres) were placed into 100 mL of a mixture of concentrated sulfuric acid and concentrated nitric acid (V (volume) : V = 1 : 1), and a resulting system was subjected to a thermal treatment (soaking at 100°C) for 1 h, and after the thermal treatment, resulting treated carbon fibers (or carbon microspheres) were cooled to room temperature, washed with deionized water, and dried at 120°C for 16 h.
(2) Carbon fibers (or carbon microspheres) obtained in step (1) and titanium dioxide were dried in a vacuum atmosphere at a high temperature (120°C, 12 h) to obtain dried carbon fibers (or carbon microspheres) and dried titanium dioxide.
(3) The dried titanium dioxide, the dried carbon fibers (or carbon microspheres), and lithium metal, in a mass ratio of 0.5 : 0.3 : 1, were mixed by roll milling.
(4) A mixture obtained in step (3) was mixed and stirred for 20 min at 370°C in a molten state to obtain a uniformly mixed composite lithium metal material.
(5) The uniformly mixed composite lithium metal material from step (4) was subjected to hot pressing (100°C, 5 min) to obtain a composite lithium metal negative electrode with a thickness of 200 µm.

FIG. 1 shows an SEM image of the composite lithium metal negative electrode prepared in Example 1 (with a mass ratio of titanium dioxide, carbon fiber, and lithium metal being 0.5 : 0.3 : 1); and FIG. 2 shows a picture of the composite lithium metal negative electrode prepared in Example 1 (with a mass ratio of titanium dioxide, carbon fiber, and lithium metal being 0.5 : 0.3 : 1). Microscopically, the surface of the composite lithium metal negative electrode is relatively rough as a result of protruding LiTiO₂ particles, and LiTiO₂ and the Li metal exhibit intimate contact without the formation of any cracks. Macroscopically, the surface is smooth, dense, and crack-free, consistent with the physical characteristics expected for a lithium metal electrode plate.

FIG. 3 shows an image showing the composition and distribution thereof of the composite lithium metal negative electrode prepared in Example 1 (with a mass ratio of titanium dioxide, carbon fiber, and lithium metal being 0.5 : 0.3 : 1). As can be seen from FIG. 3, C, O, and Ti elements are uniformly distributed in the composite lithium metal negative electrode.

### Use Example 1

The composite lithium metal negative electrode prepared in Example 1 was cut into a disk with a diameter of 16 mm and used as a negative electrode; an LFP (lithium iron phosphate) material was used as a positive electrode, with a loading amount of lithium iron phosphate being 5 mg·cm⁻²; and the negative electrode, the positive electrode, a conventionally commercial electrolyte (battery-grade, Guangzhou Tinci Materials Technology Co., Ltd., China) and a commercial PE separator (12 HP, Liaoyuan Hongtu Lithium-ion Battery Separator Technology Co., Ltd., China) were assembled into a coin full-cell. The assembly of the coin full-cell above was conducted in a glove box with both moisture and oxygen content levels below 0.1 ppm.

The charge/discharge performance of full-cells is shown in FIG. 4. Compared with a Li∥LFP full-cell constituted by a pure lithium plate, an assembled LiTiO₂/carbon fiber∥LFP full-cell, when cycled at 1 C, exhibits an initial capacity of 149.09 mAh·g⁻¹ and maintains 131.45 mAh·g⁻¹ after 350 cycles, with a capacity retention of 88.16%; an assembled LiTiO₂/carbon microspheres∥LFP full-cell, when cycled at 1 C, exhibits a capacity of 104mAh·g⁻¹ after 300 cycles, with a capacity retention of 71.72%; and the capacity of the Li∥LFP full-cell constituted by a pure lithium plate, when cycled at 1 C, decays to 78.68 mAh·g⁻¹ after 200 cycles, with a capacity retention of 55.11%. It can be seen that the assembled LiTiO₂/carbon fiber∥LFP full-cell shows no noticeable downward trend in discharge specific capacity, demonstrating more stable long-term cycling performance.

### Example 2

(1) Pre-treatment of carbon fibers: carbon fibers were placed into 100 mL of a mixture of concentrated sulfuric acid and concentrated nitric acid (V : V = 1 : 1), and a resulting system was subjected to a thermal treatment (soaking at 100°C) for 1 h, and after the thermal treatment, resulting treated carbon fibers were cooled to room temperature, washed with deionized water, and dried at 120°C for 16 h.
(2) Carbon fibers obtained in step (1) and titanium dioxide were dried in a vacuum atmosphere at a high temperature (120°C, 12 h) to obtain dried carbon fibers and dried titanium dioxide.
(3) The dried titanium dioxide, the dried carbon fibers, and lithium metal, in a mass ratio of 0.5 : 0.3 : 1, were mixed by roll milling.
(4) A mixture obtained in step (3) was mixed and stirred for 20 min at 370°C in a molten state to obtain a uniformly mixed composite lithium metal material.
(5) The uniformly mixed composite lithium metal material from step (4) was subjected to hot pressing to obtain a composite lithium metal negative electrode with a thickness of 50 µm.

### Use Example 2

The composite lithium metal negative electrode prepared in Example 2 was cut into a disk with a diameter of 16 mm and used as a negative electrode; an LFP material was used as a positive electrode, with a loading amount of LFP being 8 mg·cm⁻²; and the negative electrode, the positive electrode, a conventionally commercial electrolyte (battery-grade, Guangzhou Tinci Materials Technology Co., Ltd., China) and a commercial PE separator (12 HP, Liaoyuan Hongtu Lithium-ion Battery Separator Technology Co., Ltd., China) were assembled into a coin full-cell. The assembly of the coin full-cell above was conducted in a glove box with both moisture and oxygen content levels below 0.1 ppm.

The charge/discharge performance of full-cells is shown in FIG. 5. Compared with a Li∥LFP full-cell constituted by a pure lithium plate, an assembled LiTiO₂/carbon fiber∥LFP full-cell, when cycled at 0.5 C, exhibits an initial capacity of 162.08 mAh·g⁻¹ and maintains 154.51 mAh·g⁻¹ after 80 cycles, with a capacity retention of 95.32%; and the capacity of the Li∥LFP full-cell constituted by a pure lithium plate, when cycled at 0.5 C, significantly decreases after 18 cycles, and drops to 62.94 mAh·g⁻¹ after 21 cycles. It can be seen that the LiTiO₂/carbon fiber∥LFP full-cell assembled by a 50 µm composite lithium metal negative electrode shows no noticeable downward trend in discharge specific capacity and demonstrates stable long-term cycling performance, making it suitable for high-power-density batteries.

### Example 3

(1) Pre-treatment of carbon fibers: carbon fibers were placed into 100 mL of a mixture of concentrated sulfuric acid and concentrated nitric acid (V : V = 1 : 1), and a resulting system was subjected to a thermal treatment (soaking at 100°C) for 1 h, and after the thermal treatment, resulting treated carbon fibers were cooled to room temperature, washed with deionized water, and dried at 120°C for 16 h.
(2) Carbon fibers obtained in step (1) and titanium dioxide were subjected to a water removal treatment in a vacuum atmosphere at a high temperature (120°C, 12 h) to obtain dried carbon fibers and dried titanium dioxide.
(3) The dried titanium dioxide, the dried carbon fibers, and lithium metal, in a mass ratio of 0.4 : 1 : 1, were mixed by roll milling.
(4) A mixture obtained in step (3) was mixed and stirred for 20 min at 370°C in a molten state to obtain a uniformly mixed composite lithium metal material.
(5) The uniformly mixed composite lithium metal material from step (4) was subjected to hot pressing to obtain a composite lithium metal negative electrode with a thickness of 200 µm.

### Use Example 3

The composite lithium metal negative electrode prepared in Example 3 was cut into a disk with a diameter of 16 mm and used as a negative electrode; a ternary NCM811 (lithium nickel cobalt manganese oxide) material was used as a positive electrode, with a loading amount being 5 mg·cm⁻²; and the negative electrode, the positive electrode, a conventionally commercial electrolyte (battery-grade, Guangzhou Tinci Materials Technology Co., Ltd., China) and a commercial PE separator (12 HP, Liaoyuan Hongtu Lithium-ion Battery Separator Technology Co., Ltd., China) were assembled into a coin full-cell. The assembly of the coin full-cell above was conducted in a glove box with both moisture and oxygen content levels below 0.1 ppm.

The charge/discharge performance of full-cells was shown in FIG. 6. Compared with a Li∥NCM811 full-cell constituted by a pure lithium plate, an assembled LiTiO₂/carbon fiber∥NCM811 full-cell, when cycled at 1 C, exhibits an initial capacity of 168.37 mAh·g⁻¹ and maintains 164.54 mAh·g⁻¹ after 150 cycles, with a capacity retention of 97.72%; the capacity retention of the Li∥NCM811 full-cell constituted by a pure lithium plate, when cycled at 1 C, gradually decreases after 70 cycles and decreases to 80% after 100 cycles. The above results show that the resulting LiTiO₂/carbon fiber∥NCM811 full-cell is more stable when cycled at 1 C and shows no noticeable downward trend in discharge specific capacity, demonstrating the effectiveness of the long cycle stability of the assembled LiTiO₂/carbon fiber∥NCM811 full-cell in practical battery applications.

### Use Example 4

The composite lithium metal negative electrode prepared in Example 1 (with a mass ratio of the dried titanium dioxide, the dried carbon fiber, and the lithium metal being 0.5 : 0.3 : 1, and a thickness of 200 µm) was cut into a disk with a diameter of 16 mm and used as a negative electrode; a lithium iron phosphate material was used as a positive electrode, with a loading amount being 5 mg·cm⁻²; and the negative electrode, the positive electrode, a conventionally commercial electrolyte (battery-grade, Guangzhou Tinci Materials Technology Co., Ltd., China) and a commercial PE separator (12 HP, Liaoyuan Hongtu Lithium-ion Battery Separator Technology Co., Ltd., China) were assembled into a coin full-cell. The assembly of the coin full-cell above was conducted in a glove box with both moisture and oxygen content levels below 0.1 ppm.

The rate performance of the coin full-cell is shown in FIG. 7. An assembled LiTiO₂/carbon fiber∥LFP full-cell shows, at a rate of 0.2 C, 0.5 C, 1 C, 2 C, and 5 C, a discharge specific capacity of 158.78 mAh·g⁻¹, 156.19 mAh·g⁻¹, 149.67 mAh·g⁻¹, 140.94 mAh·g⁻¹, and 123.15 mAh·g⁻¹ mAh·g⁻¹, respectively, and recovers to 149.34mAh·g⁻¹ at 1 C. The results above show that the assembled LiTiO₂/carbon fiber∥LFP full-cell can be adapted to charge and discharge at different currents and has excellent rate performance.

An ultrathin composite lithium metal negative electrode was prepared with titanium dioxide, carbon fiber, and lithium metal in a mass ratio of 0.5 : 0.3 : 1, and the assembled LiTiO₂/carbon fiber∥LFP full-cell has excellent rate performance and long cycle stability. Titanium dioxide reacts with lithium metal to form LiTiO₂ in situ, providing a dual ionic/electronic conductive scaffold for the composite lithium metal negative electrode. LiTiO₂ and the carbon material as lithiophilic support structures can synergistically improve the interfacial stability and structural stability of the composite lithium metal negative electrode during cycling, both to maintain the advantages of high capacity of lithium metal, and to improve the infinite volume change and uncontrollable growth of lithium dendrite of the lithium metal negative electrode, thus enabling the composite lithium metal negative electrode to have excellent long cycle stability.

### Examples 4-5

(1) Pre-treatment of carbon fibers: carbon fibers were placed into 100 mL of a mixture of concentrated sulfuric acid and concentrated nitric acid (V : V = 1 : 1), and a resulting system was subjected to a thermal treatment (soaking at 100°C) for 1 h, and after the thermal treatment, resulting treated carbon fibers were cooled to room temperature, washed with deionized water, and dried at 120°C for 16 h.
(2) Carbon fibers obtained in step (1) and titanium dioxide were dried in a vacuum atmosphere at a high temperature (120°C, 12 h) to obtain dried carbon fibers and dried titanium dioxide.
(3) The dried titanium dioxide, the dried carbon fibers, and lithium metal were mixed by roll milling in a mass ratio of 1 : 1 : 1, 0.5 : 0.3 : 1 (Example 1), 0.4 : 1 : 1 (Example 3), and 0.1 : 0.1 : 1, respectively, to prepare four composite lithium metal negative electrodes.
(4) Mixtures obtained in step (3) were mixed and stirred for 20 min at 370°C in a molten state respectively to obtain uniformly mixed composite lithium metal materials.
(5) The composite lithium metal materials from step (4) were subjected to hot pressing respectively to obtain composite lithium metal negative electrodes with a thickness of 200 µm.

The prepared composite lithium metal negative electrodes were cut into disks with a diameter of 16 mm and used as negative electrodes respectively; an LFP material was used as a positive electrode, with an LFP loading amount being 5 mg·cm⁻²; and the negative electrodes, the positive electrode, a conventionally commercial electrolyte (battery-grade, Guangzhou Tinci Materials Technology Co., Ltd., China), and a commercial PE separator (12 HP, Liaoyuan Hongtu Lithium-ion Battery Separator Technology Co., Ltd., China) were assembled into coin full-cells respectively. The assembly of the coin full-cells above was conducted in a glove box with both moisture and oxygen content levels below 0.1 ppm.

Assembled coin full-cells were designated as Li-1 (with a mass ratio of titanium dioxide, carbon fiber, and lithium metal being 1 : 1 : 1), Li-2 (with a mass ratio of titanium dioxide, carbon fiber, and lithium metal being 0.5 : 0.3 : 1), Li-3 (with a mass ratio of titanium dioxide, carbon fiber, and lithium metal being 0.4 : 1 : 1), and Li-4 (with a mass ratio of titanium dioxide, carbon fiber, and lithium metal being 0.1 : 0.1 : 1), and the rate performance of full-cells with different mass ratios is shown in FIG. 8. An assembled LiTiO₂/carbon fiber∥LFP full-cells were tested at a rate of 0.2 C, 0.5 C, 1 C, 2 C, 5 C, and 1 C, and the discharge specific capacity of the Li-2 full-cell was 158.78 mAh·g⁻¹, 156.19 mAh·g⁻¹, 149.67 mAh·g⁻¹, 140.94 mAh·g⁻¹, and 123.15 mAh·g⁻¹, respectively, and recovers to 149.34 mAh·g⁻¹ at 1 C, which outperforms Li-1, Li-3, and Li-4 full-cells at all rates. An excessive amount of lithium titanate and carbon fiber may lead to particle agglomeration on the composite lithium metal negative electrode, which is detrimental to lithium metal deposition and stripping; and an insufficient amount of lithium titanate and carbon fiber is inadequate to form the skeletal structure. The LiTiO₂/carbon fiber∥LFP full-cell assembled by Li-2 offers excellent performance in terms of rate performance and cycle stability, indicating broad application potential.

Although the embodiments described above have provided a detailed description of the present disclosure, they are only a part of, rather than all of the embodiments of the present disclosure. All other embodiments that can be obtained according to the embodiments of the present disclosure without inventive efforts shall fall within the scope of the disclosure.

## Claims

1. A composite lithium metal material, comprising:
lithium metal; and
LiTiO₂ and a carbon material, all dispersed in the lithium metal.

2. The composite lithium metal material of claim 1, wherein a mass ratio of the lithium metal to the LiTiO₂ is in a range of 1 : 0.1-10.

3. The composite lithium metal material of claim 1, wherein the carbon material comprises at least one selected from the group consisting of graphene, carbon fibers, carbon microspheres, a graphite, a soft carbon, a hard carbon, and carbon nanotubes.

4. The composite lithium metal material of claim 1 or 3, wherein a mass ratio of the lithium metal to the carbon material is in a range of 1 : 0.1-10.

5. A method for preparing the composite lithium metal material of any one of claims 1 to 4, comprising the following steps:
mixing the carbon material, titanium dioxide, and the lithium metal, and melting a resulting mixture and conducting an in-situ lithiation reaction to obtain the composite lithium metal material.

6. The method of claim 5, wherein a mass ratio of the titanium dioxide, the carbon material, and the lithium metal is in a range of 0.1-10 : 0.1-10 : 1.

7. The method of claim 5, wherein mixing the carbon material, the titanium dioxide, and the lithium metal is conducted by pressing the carbon material and the titanium dioxide into the lithium metal through roll milling.

8. The method of claim 5, wherein the in-situ lithiation reaction is conducted at a temperature of 350°C to 370°C for 10 minutes to 20 minutes.

9. Use of the composite lithium metal material of any one of claims 1 to 4, or the composite lithium metal material prepared by the method of any one of claims 5 to 8 in a negative electrode of a lithium battery.

10. A composite lithium metal negative electrode, wherein the composite lithium metal negative electrode is made of the composite lithium metal material of any one of claims 1 to 4, or the composite lithium metal material prepared by the method of any one of claims 5 to 8; and
the composite lithium metal negative electrode is sheet-like and has a thickness of 30 µm to 600 µm.
